# FASCICULE DE BREVET EUROPEEN

(11) **EP 3 903 015 B1**
(45) Date de publication et mention de la délivrance du brevet: **08.02.2023**
(21) Numéro de dépôt: 19835671.9
(22) Date de dépôt: 23.12.2019
(51) Int. Cl.: F16H 25/20, F16H 19/06

(54) **TRANSMISSION POUR VÉRIN À CÂBLE À ANCRAGE D'ÉCROU DÉCALÉS**
GETRIEBE FÜR EINEN KABELZYLINDER MIT VERSETZTER MUTTERVERANKERUNG
TRANSMISSION FOR CABLE CYLINDER WITH OFFSET NUT ANCHORAGE

(30) Priorité: 27.12.2018 FR 1874228
(43) Date de publication de la demande: 03.11.2021
(73) Titulaire: Commissariat à l'Energie Atomique et aux Energies Alternatives, 75015 Paris (FR)
(72) Inventeur: GARREC, Philippe, 91190 GIF-SUR-YVETTE (FR); PEROCHON, Benoît, 78280 GUYANCOURT (FR)
(74) Mandataire: Lavialle, Bruno François Stéphane
(86) Numéro de dépôt international: PCT/EP2019/086983
(87) Numéro de publication internationale: WO 2020/136185

(56) Documents cités:
- WO-A1-2014/128178
- WO-A1-2014/161796
- US-A- 4 547 119
- US-A1- 2011 056 321

## Description

### DOMAINE DE L'INVENTION

L'invention concerne un vérin à câble comportant un ensemble vis/écrou dont l'écrou est mobile en translation et attelé à l'aide de câbles à un élément à déplacer.

### ARRIERE PLAN DE L'INVENTION

Il est connu des vérins à câbles comportant une vis montée sur un châssis et un écrou coopérant avec la vis, voir par exemple le document WO 2014/128178. L'écrou est associé à des moyens d'anti-rotation comprenant un galet ou un téton solidaire de l'écrou et monté glissant dans une rainure du châssis de sorte qu'une rotation relative de la vis et de l'écrou provoque un déplacement axial de l'écrou.

L'écrou est fonctionnellement relié à un élément à déplacer par deux brins de câble s'étendant de part et d'autre d'un plan passant par l'écrou et orthogonal à l'axe de rotation de la vis. Pour des soucis de symétrie dans la répartition des charges, les deux brins de câble sont reliés à l'écrou en un même point. Ce type de liaison se fait par sertissage des deux brins de câbles en un unique point. La réalisation et le démontage de ce type de liaison, particulièrement dans des vérins à câble de petite taille, est fastidieux et susceptible d'endommager l'écrou ou la vis lors du passage de l'outil de sertissage ou de la découpe de la sertissure. En outre, pour éviter le jeu entre la sertissure et l'écrou lors d'une inversion du sens de l'effort, il est nécessaire d'ajouter un système de blocage de la sertissure par précontrainte ce qui complique singulièrement le montage et est difficile à réaliser à petite échelle. Les opérations de fabrication, de contrôle et de maintenance d'un tel vérin à câble sont donc longues et coûteuses ce qui est un frein à la diffusion de solutions comportant un vérin à câble alors que ce type d'actionneur à câble apporte de nombreux avantages dont une transmission proportionnelle et réversible de l'effort, une faible inertie et un rapport compacité/course très intéressant.

### OBJET DE L'INVENTION

L'invention a pour objet de réduire les coûts de fabrication et/ou de maintenance d'un vérin à câble.

### RESUME DE L'INVENTION

Dans ce but, on prévoit, un actionneur à câble comprenant un châssis, une vis montée sur le châssis et s'étendant selon un premier axe, un écrou coopérant avec la vis, un moteur agencé pour entraîner en rotation la vis. Un premier brin de câble et un deuxième brin de câble sont directement attelés à l'écrou et s'étendent d'un premier côté d'un premier plan orthogonal au premier axe et passant par l'écrou, le premier brin de câble et le deuxième brin de câble s'étendant dans un deuxième plan. Un troisième brin de câble et un quatrième brin de câble sont directement attelés à l'écrou et s'étendent d'un deuxième côté du premier plan. Le premier brin de câble et le deuxième brin de câble s'étendent dans un deuxième plan et le troisième brin de câble et le quatrième brin de câble s'étendent dans un troisième plan. Le premier plan sépare le deuxième plan en un premier demi-plan dans lequel s'étendentle premier brin de câble et le deuxième brin de câble et en un deuxième demi-plan dépourvu de brins de câble directement reliés à l'écrou. Le premier plan sépare le troisième plan en un troisième demi-plan dans lequel s'étendent le troisième brin de câble et le quatrième brin de câble et en un quatrième demi-plan dépourvu de brins de câble directement reliés à l'écrou. Le premier brin de câble et/ou le deuxième brin de câble et/ou le troisième brin de câble et/ou le quatrième brin de câble étant fonctionnellement reliés à un élément à déplacer. Le deuxième plan et le troisième plan sont distincts.

Le deuxième plan et le troisième plan étant distincts, la liaison du premier brin de câble, du deuxième brin de câble, du troisième brin de câble et du quatrième brin de câble à l'écrou peut être aisément réalisée à l'aide d'un sertissage bloqué contre un perçage de l'écrou. Le démontage de telles liaisons est également particulièrement aisé et sans risque de dommage pour l'écrou. La liaison

Le coût de fabrication de l'actionneur est encore réduit lorsque l'écrou comprend une pluralité de premiers perçages, le premier brin de câble et/ou le deuxième brin de câble et/ou le troisième brin de câble et/ou le quatrième brin de câble sont attelés à l'écrou par au moins un passage dans une paire de premiers perçages. La fiabilité de la liaison est encore améliorée lorsque le premier brin de câble et le deuxième brin de câble ou le troisième brin de câble ou le quatrième brin de câble forment un unique premier câble continu.

Les efforts dans les câbles sont répartis de manière homogène lorsque le premier axe s'étend dans le deuxième et/ou le troisième plan voire lorsque le deuxième plan et le troisième plan sont orthogonaux ou encore lorsque le deuxième plan et le troisième plan forment un angle de soixante degrés.
On obtient un actionneur à sortie rotative lorsque l'actionneur comprend une première poulie, une deuxième poulie, une troisième poulie et une quatrième poulie fonctionnellement reliées à l'écrou.

Un déversement horizontal et/ou vertical de l'écrou est compensé lorsque le premier brin de câble et le deuxième brin de câble s'étendent entre l'écrou et un premier support intermédiaire fonctionnellement relié à l'élément à déplacer par un cinquième brin de câble et un sixième brin de câble.

On obtient un actionneur à sortie rotative lorsque le cinquième brin de câble s'étend entre la première poulie et le premier support intermédiaire, le sixième brin de câble s'étendant entre la deuxième poulie et le premier support intermédiaire.

La liaison au premier support est économiquement réalisée lorsque le premier support comprend une pluralité de deuxièmes perçages, le premier brin de câble et/ou le deuxième brin de câble sont attelés au premier support par au moins un passage dans une paire de deuxièmes perçages voire que le cinquième brin de câble et/ou le sixième brin de câble sont attelés au premier support par au moins un passage dans une paire de deuxièmes perçages.

Avantageusement, le cinquième brin de câble et le sixième brin de câble s'étendent dans un quatrième plan et le quatrième plan et le deuxième plan forment un angle de quarante-cinq degrés ou de de soixante degrés.

Un déversement horizontal et/ou vertical de l'écrou est compensé lorsque le troisième brin de câble et le quatrième brin de câble s'étendent entre l'écrou et un deuxième support intermédiaire fonctionnellement relié à l'élément à déplacer.

On obtient un actionneur à sortie rotative lorsqu'un septième brin de câble s'étend entre la troisième poulie et le deuxième support intermédiaire, un huitième brin de câble s'étendant entre la quatrième poulie et le deuxième support intermédiaire.

La liaison au premier support est économiquement réalisée lorsque le deuxième support comprenant une pluralité de troisièmes perçages, le troisième brin de câble et/ou le quatrième brin de câble sont attelés au deuxième support par au moins un passage dans une paire de troisièmes perçages voire que le deuxième support comprenant une pluralité de troisièmes perçages, le septième brin de câble et/ou le huitième brin de câble sont attelés au deuxième support par au moins un passage dans une paire de troisièmes perçages.

Avantageusement, le septième brin de câble et le huitième brin de câble s'étendent dans un cinquième plan et/ou le cinquième plan et le troisième plan forment un angle de quarante-cinq degrés ou de soixante degrés.

La liaison au premier support est économiquement réalisée le troisième brin de câble et le septième brin de câble ou le huitième brin de câble forment un unique câble continu.

Selon un mode de réalisation préféré, le troisième et le quatrième brin de câble s'étendent entre l'écrou (4) et un deuxième support intermédiaire fonctionnellement relié à l'élément à déplacer, l'actionneur à câble comprenant une première poulie et une deuxième poulie respectivement reliées par un cinquième et un sixième brin de câble au premier support intermédiaire, ainsi qu'une troisième poulie et une quatrième poulie respectivement reliées par un septième et un huitième brin de câble au deuxième support intermédiaire, le cinquième brin de câble et le sixième brin de câble s'étendant dans un quatrième plan, le septième brin de câble et le huitième brin de câble s'étendant dans un cinquième plan. L'écrou comprend une pluralité de premiers perçages, le premier support comprenant une pluralité de deuxièmes perçages, le deuxième support comprend une pluralité de troisièmes perçages, le premier brin de câble, le deuxième brin de câble, le troisième brin de câble, le quatrième brin de câble, le cinquième brin de câble, le sixième brin de câble, le septième brin de câble et le huitième brin de câble forment un unique câble continu attelé à l'écrou par au moins un passage dans une paire de premiers perçages, l'unique câble étant également attelé au premier support par au moins un passage dans une paire de deuxièmes perçages, l'unique câble étant également attelé au deuxième support par au moins un passage dans une paire de troisièmes perçages.

Avantageusement encore, le premier brin de câble et/ou le deuxième brin de câble et/ou le troisième brin de câble et/ou le quatrième brin de câble sont attelés à l'écrou par sertissage.

Les jeux fonctionnels son réduits et la linéarité de l'actionneur améliorée lorsque l'un quelconque des brins de câbles est préchargé.
La compacité du dispositif est encore améliorée lorsqu'une première distance séparant le premier brin de câble du premier axe est différente d'une deuxième distance séparant le troisième brin de câble et/ou le quatrième brin de câble du premier axe.

D'autres caractéristiques et avantages de l'invention apparaîtront à la lecture de la description qui suit d'un mode de réalisation particulier non limitatif de l'invention.

### BREVE DESCRIPTION DES DESSINS

Il sera fait référence annexés, parmi lesquelles :
[Fig. 1] la figure 1 est une vue en perspective d'un actionneur à câble selon un premier mode de réalisation de l'invention ;
[Fig. 2] la figure 2 est une vue partielle schématique en perspective d'un détail de la figure 1 ;
[Fig. 3] la figure 3 est une vue identique à celle de la figure 2 d'un deuxième mode de réalisation de l'invention ;
[Fig. 4] la figure 4 est une vue identique à celle de la figure 2 d'une variante du deuxième mode de réalisation de l'invention ;
[Fig. 5] la figure 5 est une vue identique à celle de la figure 2 d'un troisième mode de réalisation de l'invention ;
[Fig. 6] la figure 5 est une vue en perspective d'un actionneur à câble selon un sixième mode de réalisation de l'invention ;
[Fig. 7] la figure 7 est une vue partielle schématique en perspective d'un détail de la figure 6 ;
[Fig. 8] la figure 8 est une vue identique à celle de la figure 2 d'un septième mode de réalisation de l'invention ;
[Fig. 9] la figure 9 est une vue en perspective d'un actionneur à câble selon un huitième mode de réalisation de l'invention ;
[Fig. 10] la figure 10 est une vue identique à celle de la figure 2 d'un neuvième mode de réalisation de l'invention ;
[Fig. 11] la figure 11 est une vue en perspective d'un actionneur à câble selon un dixième mode de réalisation de l'invention.
[Fig. 12] la figure 12 est une vue en perspective d'un actionneur à câble selon un onzième mode de réalisation de l'invention.

### DESCRIPTION DETAILLEE DE L'INVENTION

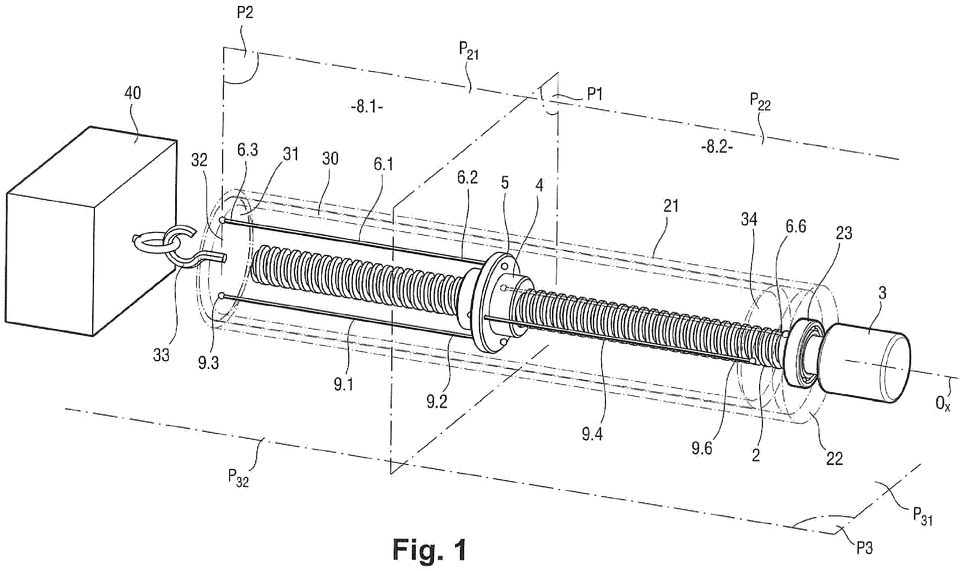

En référence à la figure 1, le vérin de l'invention, généralement désigné 100, comprend un châssis 20, ici une portion de cylindre 21 droit comprenant une base 22 au centre de laquelle un palier 23 accueille une vis 2 à rotation autour d'un premier axe Ox horizontal. La vis 2 est une vis à billes et est entraînée en rotation par un moteur électrique 3. Un écrou 4 coopère avec la vis 2 et comprend un anneau 5 en saillie radiale de l'écrou 4. Un premier brin de câble 6.1 s'étend parallèlement au premier axe Ox et est engagé au travers d'un premier perçage 10 de l'anneau 5. Le premier brin de câble 6.1 comprend en sa première extrémité 6.2 une première sertissure 7.1 venant en appui contre une première face 5.1 de l'anneau 5. Un deuxième brin de câble 9.1 s'étend parallèlement au premier axe Ox et est engagé au travers d'un deuxième perçage 11 de l'anneau 5. Le deuxième brin de câble 9.1 est maintenu en sa première extrémité 9.2 sur l'anneau 5 par une deuxième sertissure 7.2 venant en appui contre la première face 5.1 de l'anneau 5. La deuxième extrémité 6.3 du premier brin de câble 6.1 et la deuxième extrémité 9.3 du deuxième brin de câble 9.1 sont reliées à la première extrémité 31 d'un tube 30 monté à l'intérieur du cylindre 21 pour former une liaison glissière selon des modalités connues de l'homme du métier et non représentées. La première extrémité 31 du tube 30 comprend une première face transversale 32 pourvue d'un crochet 33 auquel est reliée une charge 40 à déplacer. Le premier brin de câble 6.1 et le deuxième brin de câble 9.1 s'étendent d'un premier côté 8.1 d'un premier plan P1 orthogonal au premier axe Ox et passant par l'écrou 4. Le premier brin de câble 6.1 et le deuxième brin de câble 9.1 s'étendent de part et d'autre du premier axe Ox dans un deuxième plan P2.

Un troisième brin de câble 6.4 s'étend parallèlement au premier axe Ox et est engagé au travers d'un troisième perçage 12 de l'anneau 5. Le troisième brin de câble 6.4 comprend en sa première extrémité 6.5 une troisième sertissure 7.3 venant en appui contre une deuxième face 5.2 de l'anneau 5. Un quatrième brin de câble 9.4 s'étend parallèlement au premier axe Ox et est engagé au travers d'un quatrième perçage 13 de l'anneau 5. Le quatrième brin de câble 9.4 comprend en sa première extrémité 9.5 une quatrième sertissure 7.4 venant en appui contre la deuxième face 5.2 de l'anneau 5. La deuxième extrémité 6.6 du troisième brin de câble 6.4 et la deuxième extrémité 9.6 du quatrième brin de câble 9.4 sont reliées à la deuxième face transversale 34 annulaire du tube 30

Le troisième brin de câble 6.4 et le quatrième brin de câble 9.4 s'étendent d'un deuxième côté 8.2 du premier plan P1. Le troisième brin de câble 6.4 et le quatrième brin de câble 9.4 s'étendent de part et d'autre du premier axe Ox dans un troisième plan P3 orthogonal au deuxième plan P2.

Le premier plan P1 sépare donc le deuxième plan P2 en un premier demi-plan P21 situé du premier côté 8.1 du plan P1 et en un deuxième demi-plan P22 situé du deuxième côté 8.2 du plan P1. Le premier plan P1 sépare également le troisième plan P3 en un troisième demi-plan P31 situé du deuxième côté 8.2 du plan P1 et en un quatrième demi-plan P32 situé du premier côté 8.1 du plan P1.

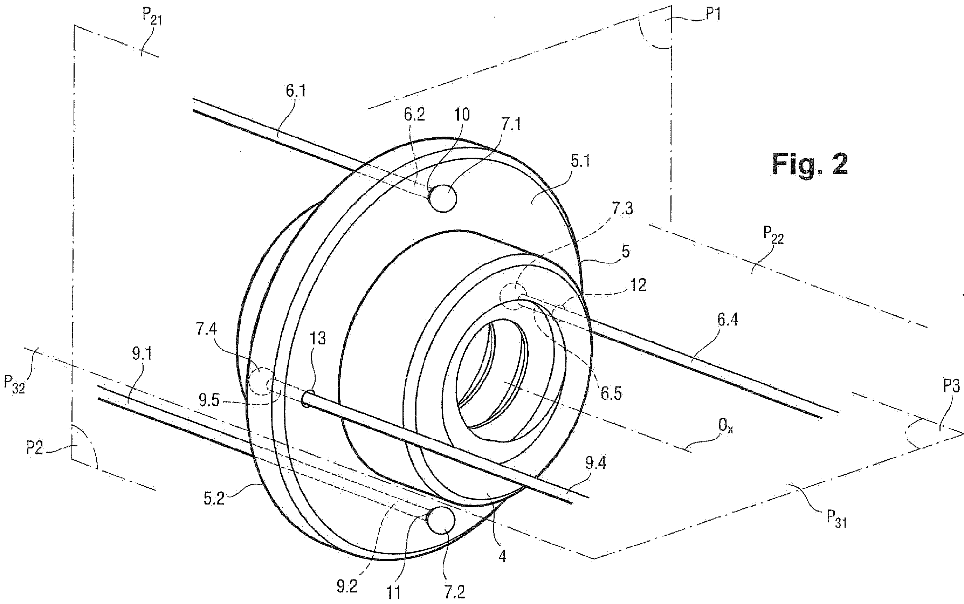

Comme visible en figure 1 et 2, le premier brin de câble 6.1 et le deuxième brin de câble 9.1 s'étendent dans le premier demi-plan P21 et le deuxième demi-plan P22 est dépourvu de brins de câble directement reliés à l'écrou 4. De manière homologue, le troisième brin de câble 6.4 et le quatrième brin de câble 9.4 s'étendent dans le troisième demi-plan P31 et le quatrième demi-plan P32 est dépourvu de brins de câble directement reliés à l'écrou 4.

En fonctionnement, sous l'effet du moteur 3, une rotation de la vis 2 provoque une rotation identique de l'écrou 4 en raison des frottements de contact entre la vis 2 et l'écrou 4. Ce déplacement met en tension le premier brin de câble 6.1, le deuxième brin de câble 9.1, le troisième brin de câble 6.4 et le quatrième brin de câble 9.4 qui viennent alors exercer des efforts s'opposant à un entraînement en rotation de l'écrou 4 par la vis 2. Le premier brin de câble 6.1, le deuxième brin de câble 9.1, le troisième bri de câble 6.4 et le quatrième brin de câble 9.4 réalisent alors - en sus de leurs fonctions de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. L'agencement des brins de câbles autorise de légers déversement horizontaux ou verticaux (selon la représentation de la figure 1) de l'écrou 4.

Le deuxième plan P2 et le troisième plan P3 étant distincts, la liaison du premier brin de câble 6.1, du deuxième brin de câble 9.1 du troisième brin de câble 6.4 et du quatrième brin de câble 9.4 à l'écrou 4 peut être aisément réalisée à l'aide d'un sertissage bloqué contre un perçage de l'écrou 4. Le démontage de telles liaisons est lui également particulièrement aisé et sans risque de dommage pour l'écrou 4.

Les éléments identiques ou analogues à ceux précédemment décrits porteront une référence numérique identique à celle-ci dans la description qui suit des deuxième, troisième, quatrième, cinquième, sixième, septième, huitième, neuvième, dixième et onzième modes de réalisation de l'invention.

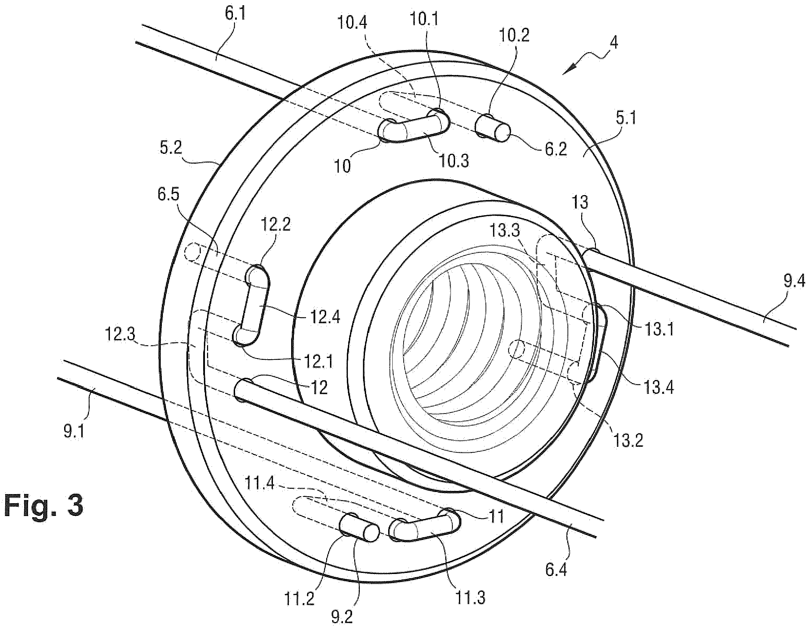

Selon un deuxième mode de réalisation et comme visible en figure 3, l'écrou 4 comporte un cinquième perçage 10.1, un sixième perçage 10.2, un septième perçage 11.1, un huitième perçage 11.2, un neuvième perçage 12.1, un dixième perçage 12.2, un onzième perçage 13.1 et un douzième perçage 13.2. Le premier perçage 10, le cinquième perçage 10.1, le sixième perçage 10.2, le deuxième perçage 11, le septième perçage 11.1, le huitième perçage 11.2, le troisième perçage 12, le neuvième perçage 12.1, le dixième perçage 12.2, le quatrième perçage 13, le onzième perçage 13.1 et le douzième perçage 13.2 constituent une pluralité de premier perçages.

Le premier brin de câble 6.1 passe au travers du premier perçage 10, s'étend le long de la première face 5.1 de l'anneau 5 pour rejoindre le cinquième perçage 10.1. Le premier brin de câble 6.1 passe ensuite au travers du cinquième perçage 10.1, s'étend le long de la deuxième face 5.2 de l'anneau 5 pour passer au travers du sixième perçage 10.2. Le premier brin de câble 6.1 réalise alors un premier passage 10.3 et un deuxième passage 10.4 de blocage du premier brin de câble 6.1 dans l'anneau 5. Le premier passage 10.3 et le deuxième passage 10.4 bloquent par friction le premier brin de câble 6.1 dans l'anneau 5. Ainsi, le premier brin de câble 6.1 est attelé à l'écrou 4 par le premier passage 10.3 et le deuxième passage 10.4 du premier brin de câble 6.1 dans le premier perçage 10, le cinquième perçage 10.1 et le sixième perçage 10.2.

Similairement, le deuxième brin de câble 9.1 passe au travers du deuxième perçage 11, s'étend le long de la première face 5.1 de l'anneau 5 pour rejoindre le septième perçage 11.1. Le deuxième brin de câble 9.1 passe ensuite au travers du septième perçage 11.1, s'étend le long de la deuxième face 5.2 de l'anneau 5 pour passer au travers du huitième perçage 11.2. Le deuxième brin de câble 9.1 réalise alors un troisième passage 11.3 et un quatrième passage 11.4 de blocage du deuxième brin de câble 9.1 dans l'anneau 5. Le troisième passage 11.3 et le quatrième passage 11.4 bloquent par friction le deuxième brin de câble 9.1 dans l'anneau 5. Ainsi, le deuxième brin de câble 9.1 est attelé à l'écrou 4 par le troisième passage 11.3 et le quatrième passage 11.4 du deuxième brin de câble 9.1 dans le deuxième perçage 11, le septième perçage 11.1 et le huitième perçage 11.2.

Similairement, le troisième brin de câble 6.4 passe au travers du troisième perçage 12, s'étend le long de la deuxième face 5.2 de l'anneau 5 pour rejoindre le neuvième perçage 12.1. Le troisième brin de câble 6.4 passe ensuite au travers du neuvième perçage 12.1, s'étend le long de la première face 5.1 de l'anneau 5 pour passer au travers du dixième perçage 12.2. Le troisième brin de câble 6.4 réalise alors un cinquième passage 12.3 et un sixième passage 12.4 de blocage du troisième brin de câble 6.4 dans l'anneau 5. Le cinquième passage 12.3 et le sixième passage 12.4 bloquent par friction le troisième brin de câble 6.4 dans l'anneau 5. Ainsi, le troisième brin de câble 6.4 est attelé à l'écrou 4 par le cinquième passage 12.3 et le sixième passage 12.4 du troisième brin de câble 6.4 dans le troisième perçage 12, le neuvième perçage 12.1 et le dixième perçage 12.2.

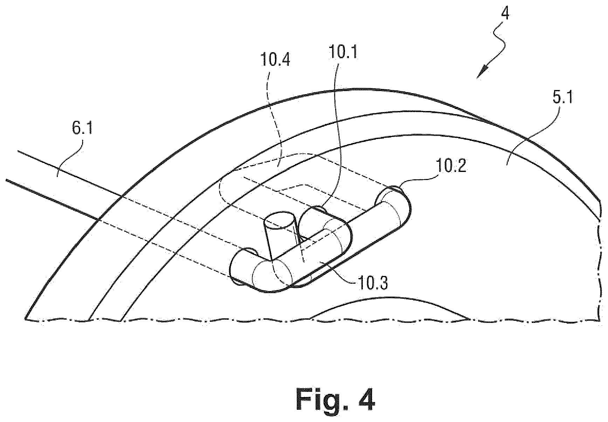

Optionnellement, la première extrémité 6.2 du premier brin de câble 6.1 peut s'étendre entre le premier passage 10.3 et la première face 5.1 de l'anneau 5 (figure 4). Une disposition similaire peut également être reproduite pour la première extrémité 9.2 du deuxième brin de câble 9.1, la première extrémité 6.5 du troisième câble 6.4 et la première extrémité 9.5 du quatrième câble 9.4.

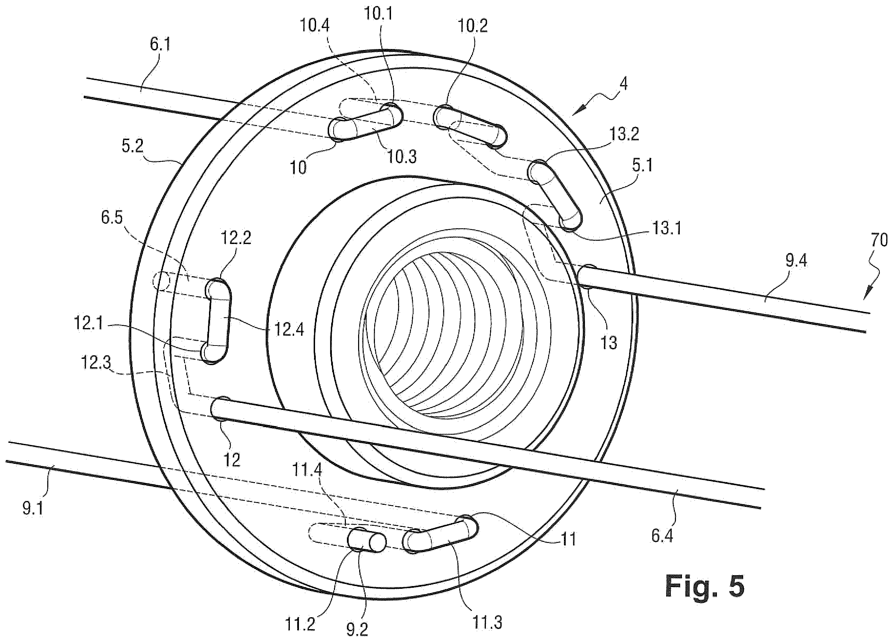

Selon un troisième mode de réalisation représenté en figure 5, le premier brin de câble 6.1, en sortie du sixième perçage 10.2, s'étend le long de la première face 5.1 jusqu'à un treizième perçage 10.5 supplémentaire de l'anneau 5. Le premier brin de câble 6.1 passe ensuite dans le douzième perçage 13.2 et s'étend le long de la deuxième face 5.2 pour pénétrer dans le douzième perçage 13.2, s'étendre le long de la première face 5.1, pénétrer dans le onzième perçage 13.1 s'étendre le long de la deuxième face 5.2 et ressortir par le quatrième perçage 13 pour s'étendre jusqu'à la deuxième face transversale 34 annulaire du tube 30. Ainsi, le premier brin de câble 6.1 et le quatrième brin de câble 9.4 forment un unique câble 70 continu.

Selon un quatrième mode de réalisation non représenté, le premier brin de câble 6.1 et le deuxième brin de câble 9.1 forment un unique câble 70 continu. Selon un cinquième mode de réalisation non représenté, le premier brin de câble 6.1 et le troisième brin de câble 6.4 forment un unique câble 70 continu.

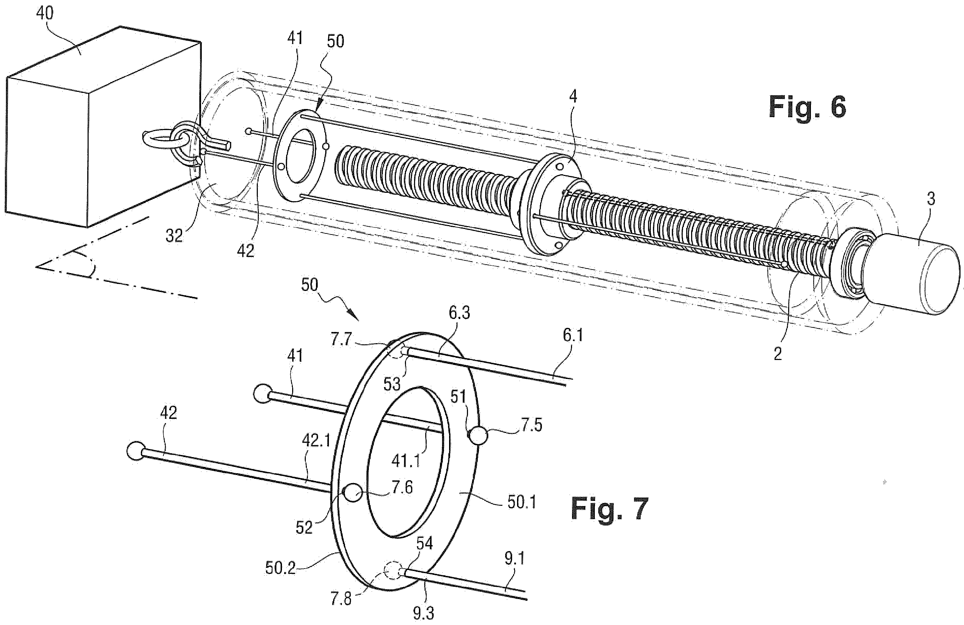

Selon un sixième mode de réalisation représenté en figures 6 et 7, un cinquième brin de câble 41 et un sixième brin de câble 42 s'étendent parallèlement au premier axe Ox entre un premier support intermédiaire 50 annulaire et la première face transversale 32 du tube 30. La première extrémité 41.1 du cinquième brin de câble 41 est engagée au travers d'un quatorzième perçage 51 du premier support intermédiaire 50 et comprend une cinquième sertissure 7.5 venant en appui contre une première face 50.1 du premier support intermédiaire 50. La première extrémité 42.1 du sixième brin de câble 42 est engagée au travers d'un quinzième perçage 52 du premier support intermédiaire 50 et comprend une sixième sertissure 7.6 venant en appui contre la première face 50.1 du premier support intermédiaire 50.

La deuxième extrémité 6.3 du premier brin de câble 6.1 est engagée au travers d'un seizième perçage 53 du premier support intermédiaire 50 et comprend une septième sertissure 7.7 venant en appui contre la deuxième face 50.2 du premier support intermédiaire 50. La deuxième extrémité 9.3 du deuxième brin de câble 9.1 est engagée au travers d'un dix-septième perçage 54 du support intermédiaire 50 et comprend une huitième sertissure 7.8 venant en appui contre la deuxième face 50.2 du premier support intermédiaire 50.

Le cinquième brin de câble 41 et un sixième brin de câble 42 s'étendent de part et d'autre du premier axe Ox dans un quatrième plan P4 comprenant le premier axe Ox. Le quatrième plan P4 s'étend sensiblement orthogonalement au deuxième plan P2.

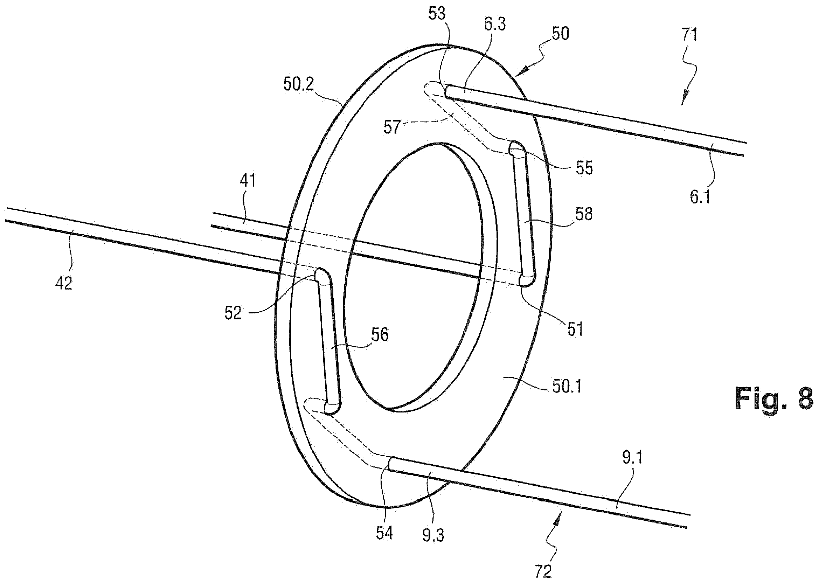

Comme visible en figure 8, et selon un septième mode de réalisation, le premier support intermédiaire 50 comprend un dix-huitième perçage 55 situé entre le quatorzième perçage 51 et le seizième perçage 53, un dix-neuvième perçage 56 situé entre le quinzième perçage 52, et le dix-septième perçage 54.

Le quatorzième perçage 51, le quinzième perçage 52, le seizième perçage 53, le dix-septième perçage 54, le dix-neuvième perçage 56 constituent une pluralité de deuxièmes perçages.

Le premier brin de câble 6.1 pénètre le seizième perçage 53, s'étend le long de la deuxième face 50.2 du premier support intermédiaire 50 et s'engage ensuite dans le dix-huitième perçage 55. En sortie du dix-huitième perçage 55, le premier brin de câble 6.1 s'étend le long de la première face 50.1 jusqu'au quatorzième perçage 51 pour ressortir par le quatorzième perçage 51 et s'étendre jusqu'à la première face transversale 32 du tube 30. Ainsi, le premier brin de câble 6.1 et le cinquième brin de câble 41 forment un unique câble 71 continu. Le premier brin de câble 6.1 réalise alors un septième passage 57 et un huitième passage 58 de blocage du premier brin de câble 6.1 dans le premier support intermédiaire 50. Le septième passage 57 et le huitième passage 58 bloquent par friction le premier brin de câble 6.1 dans le premier support intermédiaire 50.

Le deuxième brin de câble 9.1 pénètre le dix-septième perçage 54, s'étend le long de la deuxième face 50.2 du premier support intermédiaire 50 et s'engage ensuite dans le dix-neuvième perçage 56. En sortie du dix-neuvième perçage 56, le deuxième brin de câble 9.1 s'étend le long de la première face 50.1 jusqu'au quinzième perçage 52 pour ressortir par le quatorzième perçage 51 et s'étendre jusqu'à la première face transversale 32 du tube 30. Ainsi, le deuxième brin de câble 9.1 et le sixième brin de câble 42 forment un unique câble 72 continu.

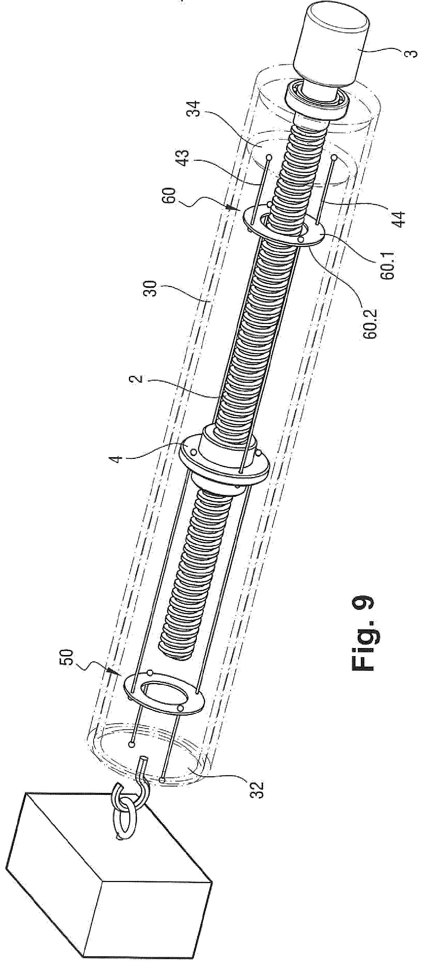

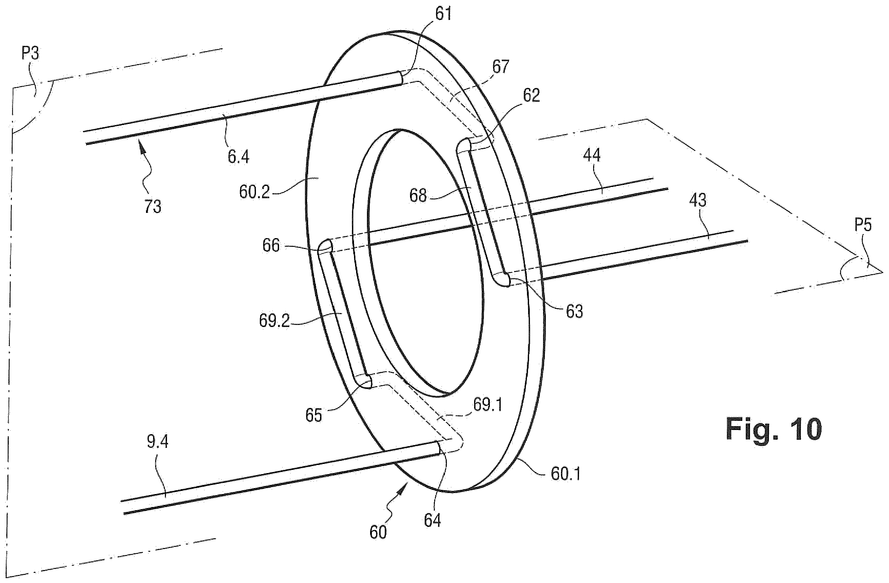

Selon un neuvième mode de réalisation représenté en figure 9 et 10, un septième brin de câble 43 et un huitième brin de câble 44 s'étendent parallèlement au premier axe Ox entre un deuxième support intermédiaire 60 annulaire et une deuxième face transversale 34 du tube 30 opposée à la première face transversale 32.

Le deuxième support intermédiaire 60 comprend un vingtième perçage 61, un vingt-et-unième perçage 62, un vingt-deuxième perçage 63, un vingt-troisième perçage 64, un vingt-quatrième perçage 65 et un vingt-cinquième perçage 66. Le vingtième perçage 61, le vingt-et-unième perçage 62, le vingt-deuxième perçage 63, le vingt-troisième perçage 64, le vingt-quatrième perçage 65 et le vingt-cinquième perçage 66 constituent une pluralité de troisièmes perçages.

Le troisième brin de câble 6.4 pénètre le vingtième perçage 61 s'étend le long d'une première face 60.1 du deuxième support intermédiaire 60 et s'engage ensuite dans le vingt-et-unième perçage 62. En sortie du vingt-et-unième perçage 62, le troisième brin de câble 6.4 s'étend le long de la deuxième face 60.2 jusqu'au vingt-deuxième perçage 63 pour ressortir par le vingt-deuxième perçage 63 et s'étendre jusqu'à la deuxième face transversale 34 du tube 30. Ainsi, le troisième brin de câble 6.4 et le septième brin de câble 43 forment un unique câble 73 continu. Le troisième brin de câble 6.4 réalise alors un neuvième passage 67 et un dixième passage 68 de blocage du troisième brin de câble 6.4 dans le deuxième support intermédiaire 60. Le neuvième passage 67 et le dixième passage 68 bloquent par friction le troisième brin de câble 6.4 dans le deuxième support intermédiaire 60. Le septième brin de câble 43 et le huitième brin de câble 44 s'étendent de part et d'autre du premier axe Ox dans un cinquième plan P5 comprenant le premier axe Ox. Le cinquième plan P5 s'étend sensiblement orthogonalement au troisième plan P3.

Le quatrième brin de câble 9.4 pénètre le vingt-troisième perçage 64, s'étend le long de la première face 60.1 du deuxième support intermédiaire 60 et s'engage ensuite dans le vingt-quatrième perçage 65. En sortie du vingt-quatrième perçage 65, le quatrième brin de câble 9.4 s'étend le long de la deuxième face 60.2 jusqu'au vingt-cinquième perçage 66 pour ressortir par le vingt-cinquième perçage 66 et s'étendre jusqu'à la deuxième face transversale 34 du tube 30. Ainsi, le quatrième brin de câble 9.4 et le huitième brin de câble 44 forment un unique câble 74 continu. Le quatrième brin de câble 9.4 réalise alors un onzième passage 69.1 et un douzième passage 69.2 de blocage du quatrième brin de câble 9.4 dans le deuxième support intermédiaire 60. Le onzième passage 69.1 et le douzième passage 69.2 bloquent par friction le quatrième brin de câble 9.4 dans le deuxième support intermédiaire 60.

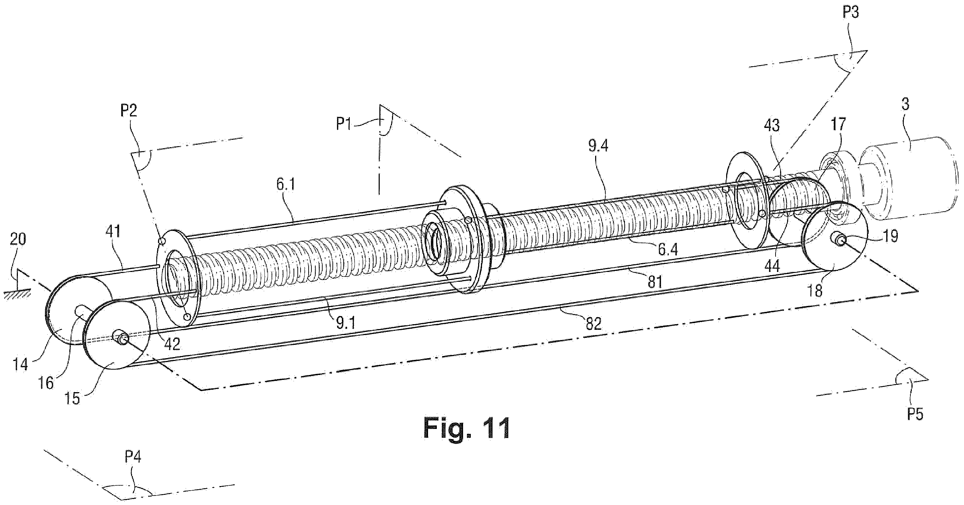

Selon un dixième mode de réalisation représenté en figure 11, le vérin 100 comprend une première poulie 14 et une deuxième poulie 15 solidaires d'un premier arbre 16 relié au châssis 20 et s'étendant parallèlement au quatrième plan P4. Le vérin 100 comprend également une troisième poulie 17 et une quatrième poulie 18 solidaires d'un deuxième arbre 19 relié au châssis 20 et s'étendant dans le cinquième plan P5. Dans ce mode de réalisation particulier, le deuxième plan P2 et le troisième plan P3 sont orthogonaux. Le quatrième plan P4 forme un angle de quarante-cinq degrés avec le deuxième plan P2 et le cinquième plan P5 forme un angle de quarante-cinq degrés avec le troisième plan P3.

Le cinquième brin de câble 41 et le septième brin de câble 43 sont respectivement enroulés autour de la première poulie 14 et la troisième poulie 17. Le cinquième brin de câble 41 et le septième brin de câble 43 se rejoignent en sortie de la première poulie 14 et de la troisième poulie 17 pour former une première boucle de câble 81.

Le sixième brin de câble 42 et le huitième brin de câble 44 sont respectivement enroulés autour de la deuxième poulie 15 et la quatrième poulie 18. Le sixième brin de câble 42 et le huitième brin de câble 44 se rejoignent en sortie de la deuxième poulie 15 et de la quatrième poulie 18 pour former une deuxième boucle de câble 82. La première boucle de câble 81 et la deuxième boucle de câble 82 sont préchargées, par exemple en agissant sur la distance séparant le premier arbre 16 et le deuxième arbre 19.

Ainsi, un élément rendu solidaire en rotation du premier arbre 16 ou du deuxième arbre 19 peut être actionné en rotation par le moteur électrique 3.

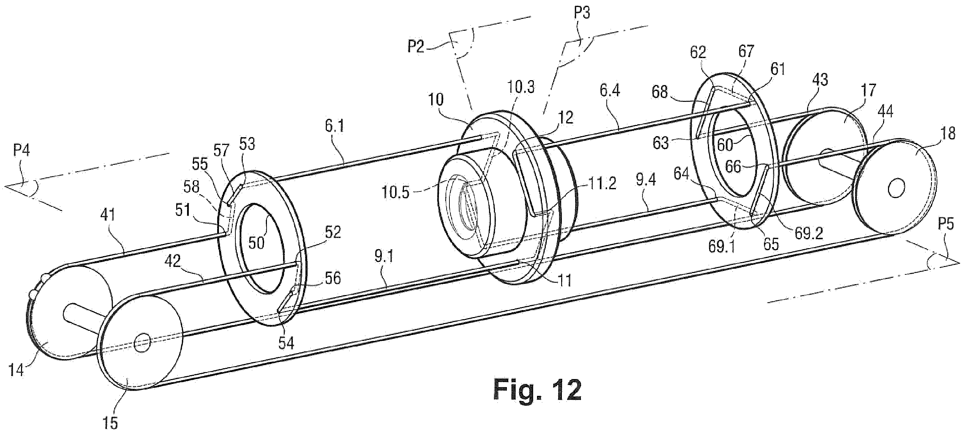

Selon un onzième mode de réalisation représenté en figure 12, le deuxième plan P2 et le troisième plan P3 forment un angle de soixante degrés. Le quatrième plan P4 forme un angle de cent-vingt degrés avec le deuxième plan P2 et le cinquième plan P5 forme un angle de cent-vingt degrés avec le troisième plan P3. Une deuxième extrémité 41.2 du cinquième brin de câble 41 est sertie sur la première poulie 14 et s'étend jusqu'au premier support intermédiaire 50. Le cinquième brin de câble 41 est lié au premier support intermédiaire 50 à l'aide du huitième passage 58 qui s'étend entre le quatorzième perçage 51 et le dix-huitième perçage 55 ainsi qu'à l'aide du septième passage 57 qui s'étend entre le dix-huitième perçage 55 et le seizième perçage 53 pour ensuite rejoindre le premier brin de câble 6.1. Le premier brin de câble 6.1 est lié à l'anneau 5 à l'aide du premier passage 10.3 qui s'étend entre le premier perçage 10 et le treizième perçage 10.5 ainsi qu'à l'aide du deuxième passage 10.4 qui s'étend depuis le treizième perçage 10.5 jusqu'au quatrième perçage 13. Le premier brin de câble 6.1 rejoint le quatrième brin de câble 9.4 qui s'étend depuis l'anneau 5 jusqu'au deuxième support intermédiaire 50. Le quatrième brin de câble 9.4 est lié au deuxième support intermédiaire 60 à l'aide du onzième passage 69.1 qui s'étend entre le vingt-troisième perçage 64 et le vingt-quatrième perçage 65 ainsi qu'à l'aide du douzième passage 69.2 qui s'étend entre le vingt-quatrième perçage 65 et le vingt-cinquième perçage 66. Le quatrième brin de câble 9.4 rejoint le huitième brin de câble 44 qui s'enroule autour de la quatrième poulie 18 et s'étend ensuite sensiblement parallèlement au premier axe Ox pour s'enrouler autour de la deuxième poulie 15. Le huitième brin de câble 44 rejoint, en sortie de la deuxième poulie 15, le sixième brin de câble 42 qui s'étend jusqu'au premier support intermédiaire 50. Le sixième brin de câble 42 est lié au premier support intermédiaire 50 à l'aide du passage de câble qui s'étend entre le quinzième perçage 52 et le dix-neuvième perçage 56 ainsi qu'à l'aide du passage de câble qui s'étend depuis le dix-neuvième perçage 56 jusqu'au dix-septième perçage 54. Le sixième brin de câble 42 rejoint le deuxième brin de câble 9.1 qui s'étend depuis le premier support intermédiaire 50 jusqu'à l'anneau 5. Le deuxième brin de câble 9.1 est lié à l'anneau 5 à l'aide du passage de câble qui s'étend entre le deuxième perçage 11 et le huitième perçage 11.2 ainsi qu'à l'aide du passage de câble qui s'étend entre le huitième perçage 11.2 et le troisième perçage 12. Le deuxième brin de câble 9.1 rejoint le troisième brin de câble 6.4 qui s'étend depuis l'anneau 5 jusqu'au deuxième support intermédiaire 60. Le troisième brin de câble 6.4 est lié au deuxième support intermédiaire 60 à l'aide du neuvième passage 67 qui s'étend entre le vingtième perçage 61 et le vingt-et-unième perçage 62 ainsi qu'à l'aide du dixième passage 68 qui s'étend entre le vingt-et-unième perçage 62 et le vingt-deuxième perçage 63. Le troisième brin de câble 6.4 rejoint le septième brin de câble 43 qui s'enroule autour de la troisième poulie 17 et s'étend ensuite sensiblement parallèlement au premier axe Ox pour s'enrouler autour de la deuxième poulie 15 sur laquelle le septième brin de câble est serti.

Ainsi, le premier brin de câble 6.1, le deuxième brin de câble 9.1, le troisième brin de câble 6.4, le quatrième brin de câble 9.4, le cinquième brin de câble 41, le sixième brin de câble 42, le septième brin de câble 43 et le huitième brin de câble 44 forment un unique câble continu.

Dans l'ensemble des modes de réalisation décrits, le premier brin de câble 6.1, le deuxième brin de câble 9.1, le troisième brin de câble 6.4, le quatrième brin de câble 9.4, le cinquième brin de câble 41, le sixième brin de câble 42, le septième brin de câble 43 et le huitième brin de câble 44 sont avantageusement préchargés.
Bien entendu, l'invention n'est pas limitée aux modes de réalisation décrits mais englobe toute variante entrant dans le champ de l'invention telle que définie par les revendications.
En particulier,
- bien qu'ici les premier, deuxième, troisième et quatrième brins de câble soient attelés sur l'écrou à des distances du premier axe égales, l'invention s'applique également à d'autres configurations des points d'attelage des brins sur l'écrou, comme par exemple un premier et un deuxième brin attelés sur l'écrou à un même première distance différente d'une deuxième distance séparant les points d'attelage du troisième et quatrième câble. La distance séparant le point d'attelage du premier brin de câble (respectivement troisième brin de câble) et le premier axe ainsi que la distance séparant le point d'attelage du deuxième brin de câble (respectivement quatrième brin de câble) et le premier axe sont préférentiellement égales.
- bien qu'ici, le châssis soit de forme cylindrique, l'invention s'applique également à d'autres formes de châssis comme par exemple une platine, un tube carré, une forme quelconque ;
- bien qu'ici l'axe de rotation de la vis s'étende horizontalement, l'invention s'applique également à d'autres orientations de l'axe de rotation de la vis comme par exemple une orientation verticale, à quarante-cinq degrés ou quelconque ;
- bien qu'ici le vérin comprenne une vis à billes, l'invention s'applique également à d'autres types de vis comme par exemple une vis à filets simples, ou à rouleaux ;
- bien qu'ici le premier câble soit attelé à l'écrou par un sertissage bloqué par un perçage réalisé dans un anneau solidaire de l'écrou, l'invention s'applique également à d'autres moyens d'atteler un câble à l'écrou comme par exemple un sertissage dans un oeillet solidaire de l'écrou ou une sertissure dans un perçage réalisé dans l'écrou ;
- bien qu'ici les câbles s'étendent parallèlement au premier axe, l'invention s'applique également à d'autres configurations des câbles dans lesquelles aucun tronçon ou un seul tronçon de câbles s'étend parallèlement au premier axe, le reste du câble pouvant adopter une orientation quelconque par rapport au premier axe ;
- bien que les première et deuxième poulies soient solidaire d'un même arbre, l'invention s'applique également à des poulies montées sur des arbres indépendants ;
- bien qu'ici l'ensemble des câbles du vérin soient préchargés, l'invention s'applique également à un unique câble préchargés ou seulement une fraction des câbles préchargés ;
- bien qu'ici le troisième plan soit orthogonal au deuxième plan, l'invention s'applique également à d'autres orientation s relatives des deuxième et troisième plans comme par exemple une deuxième plan et un troisième plan qui forment un angle de quarante-cinq degrés ou de soixante degrés, ou d'autres valeurs comprises entre zéro degrés et inférieures à cent-quatre-vingt degrés. Les deuxième et troisième plans pouvant être parallèles entre eux ;
- bien qu'ici le quatrième plan soit orthogonal au deuxième plan, l'invention s'applique également à d'autres orientation s relatives des deuxième et quatrième plans comme par exemple une deuxième plan et un quatrième plan qui forment un angle de quarante-cinq degrés ou de soixante degrés, ou d'autres valeurs comprises entre zéro degrés et inférieures à cent-quatre-vingt degrés. Les deuxième et quatrième plans pouvant être parallèles entre eux ;
- bien qu'ici le cinquième plan soit orthogonal au troisième plan, l'invention s'applique également à d'autres orientation s relatives des troisième et cinquième plans comme par exemple une troisième plan et un cinquième plan qui forment un angle de quarante-cinq degrés ou de soixante degrés, ou d'autres valeurs comprises entre zéro degrés et inférieures à cent-quatre-vingt degrés. Les troisième et cinquième plans pouvant être parallèles entre eux ;
- bien qu'ici le premier axe soit compris dans les premier, deuxième, troisième, quatrième et cinquième plans, l'invention s'applique également à un ou plusieurs des premier à cinquième plan qui ne comprennent pas le premier axe ;
- bien qu'ici la pluralité de premiers perçages comprenne douze perçages, l'invention s'applique également à un écrou comprenant entre deux et onze perçages ou plus de douze ;
- bien qu'ici la pluralité de deuxièmes perçages comprenne cinq perçages, l'invention s'applique également à un premier support intermédiaire comprenant entre deux et quatre perçages ou plus de cinq ;
- bien qu'ici la pluralité de troisièmes perçages comprenne sept perçages, l'invention s'applique également à un deuxième support intermédiaire comprenant entre deux et six perçages ou plus de sept ;
- bien qu'ici le premier brin de câble réalise deux passages dans l'écrou, l'invention s'applique également à un brin de câble brin réalisant un unique passage de fixation avec l'écrou, le premier support intermédiaire ou le deuxième support intermédiaire. Il est également possible de mixer les solutions de fixation des câbles en conservant les avantages de l'invention et disposer d'un brin de câble serti et un autre brin de câble lié à l'aide d'un passage de blocage dans deux perçages.

## Revendications

1. Actionneur à câble (100) comprenant :
- un châssis (20) ;
- une vis (2) montée sur le châssis et s'étendant selon un premier axe (Ox) ;
- un écrou (4) coopérant avec la vis (2) ;
- un moteur (3) agencé pour entraîner en rotation la vis (2) ;
- un premier brin de câble (6.1) et un deuxième brin de câble (9.1) directement attelés à l'écrou (4) et s'étendant d'un premier côté (8.1) d'un premier plan (P1) orthogonal au premier axe (Ox) et passant par l'écrou (4), le premier brin de câble (6.1) et le deuxième brin de câble (9.1) s'étendant dans un deuxième plan (P2) ;
- un troisième brin de câble (6.4) et un quatrième brin de câble (9.4) directement attelés à l'écrou (4) et s'étendant d'un deuxième côté (8.2) du premier plan (P1), le troisième brin de câble (6.4) et le quatrième brin de câble (9.4) s'étendant dans un troisième plan (P3) ;
- le deuxième plan (P2) et le troisième plan (P3) étant distincts,
- le premier brin de câble (6.1) et/ou le deuxième brin de câble (9.1) et/ou le troisième brin de câble (6.4) et/ou le quatrième brin de câble (9.4) étant fonctionnellement reliés à un élément à déplacer (40) , l'actionneur étant **caractérisé en ce que**
- le premier plan sépare le deuxième plan en un premier demi-plan dans lequel s'étendent le premier brin de câble et le deuxième brin de câble et en un deuxième demi-plan dépourvu de brins de câble directement reliés à l'écrou; et **en ce que**
- le premier plan sépare le troisième plan en un troisième demi-plan dans lequel s'étendent le troisième brin de câble et le quatrième brin de câble et en un quatrième demi-plan dépourvu de brins de câble directement reliés à l'écrou.

2. Actionneur à câble (100) selon l'une quelconque des revendication précédentes , dans lequel l'écrou (4) comprenant une pluralité de premiers perçages (10, 10.1, 10.2, 11, 11.1, 11.2, 12, 12.1, 12.2, 13, 13.1, 13.2), le premier brin de câble (6.1) et/ou le deuxième brin de câble -9.1) et/ou le troisième brin de câble (6.4) et/ou le quatrième brin de câble (9.4) sont attelés à l'écrou (4) par au moins un passage dans une paire de premiers perçages (10, 10.1, 10.2, 11, 11.1, 11.2, 12, 12.1, 12.2, 13, 13.1, 13.2).

3. Actionneur à câble (100) selon la revendication 2, dans lequel le premier brin de câble (6.1) et le deuxième brin de câble (9.1) ou le troisième brin de câble (6.4) ou le quatrième brin de câble (9.4) forment un unique premier câble continu (70).

4. Actionneur à câble (100) selon l'une quelconque des revendications 1 à 3, dans lequel le premier axe (Ox) s'étend dans le deuxième plan (P2) et/ou dans le troisième plan (P3).

5. Actionneur à câble (100) selon l'une quelconque des revendications précédentes, dans lequel le deuxième plan (P2) et le troisième plan (P3) sont orthogonaux.

6. Actionneur à câble (100) selon l'une quelconque des revendications précédentes, dans lequel le deuxième plan (P2) et le troisième plan (P3) forment un angle de soixante degrés.

7. Actionneur à câble (100) selon l'une quelconque des revendications précédentes, comprenant une première poulie (14), une deuxième poulie (15), une troisième poulie (17) et une quatrième poulie (18) fonctionnellement reliées à l'écrou (4).

8. Actionneur (100) selon l'une quelconque des revendications précédentes, dans lequel le premier brin de câble (6.1) et le deuxième brin de câble (9.1) s'étendent entre l'écrou (4) et un premier support intermédiaire (50) fonctionnellement relié à l'élément à déplacer (40) par un cinquième brin de câble (41) et un sixième brin de câble (42).

9. Actionneur à câble (100) selon les revendications 7 et 8, dans lequel le cinquième brin de câble (41) s'étend entre la première poulie (14) et le premier support intermédiaire (50), le sixième brin de câble (42) s'étendant entre la deuxième poulie (15) et le premier support intermédiaire (50).

10. Actionneur à câble (100) selon l'une des revendications 8 ou 9, dans lequel le premier support intermédiaire (50) comprenant une pluralité de deuxièmes perçages (51, 52, 53, 54, 56), le premier brin de câble (6.1) et/ou le deuxième brin de câble (9.1) sont attelés au premier support intermédiaire (50) par au moins un passage dans une paire de deuxièmes perçages (51, 52, 53, 54, 56).

11. Actionneur à câble (100) selon la revendication 9, dans lequel le premier support intermédiaire (50) comprenant une pluralité de deuxièmes perçages (51, 52, 53, 54, 56), le cinquième brin de câble (41) et/ou le sixième brin de câble (42) sont attelés au premier support intermédiaire (50) par au moins un passage dans une paire de deuxièmes perçages (51, 52, 53, 54, 56).

12. Actionneur à câble (100) selon l'une quelconque des revendications 9 à 11, dans lequel le cinquième brin de câble '41) et le sixième brin de câble (42) s'étendent dans un quatrième plan (P4).

13. Actionneur à câble (100) selon la revendication 12, dans lequel le quatrième plan (P4) et le deuxième plan (P2) forment un angle de quarante-cinq degrés ou de de soixante degrés.

14. Actionneur à câble (100) selon l'une des revendications précédentes, dans lequel le troisième brin de câble (6.4) et le quatrième brin de câble (9.4) s'étendent entre l'écrou (4) et un deuxième support intermédiaire (60) fonctionnellement relié à l'élément à déplacer (40).

15. Actionneur à câble (100) selon les revendications 7 et 14, dans lequel un septième brin de câble (43) s'étend entre la troisième poulie (17) et le deuxième support intermédiaire (60), un huitième brin de câble (44) s'étendant entre la quatrième poulie (18) et le deuxième support intermédiaire (60).

16. Actionneur à câble (100) selon l'une des revendications 14 ou 15, dans lequel le deuxième support intermédiaire (60) comprenant une pluralité de troisièmes perçages (61, 62, 63, 64, 65, 66), le troisième brin de câble (6.4) et/ou le quatrième brin de câble (9.4) sont attelés au deuxième support intermédiaire (60) par au moins un passage dans une paire de troisièmes perçages (61, 62, 63, 64, 65, 66).

17. Actionneur à câble (100) selon l'une des revendications 15 ou 16, dans lequel le deuxième support intermédiaire (60) comprenant une pluralité de troisièmes perçages (61, 62, 63, 64, 65, 66), le septième brin de câble (43) et/ou le huitième brin de câble (44) sont attelés au deuxième support intermédiaire (60) par au moins un passage dans une paire de troisièmes perçages (61, 62, 63, 64, 65,66).

18. Actionneur à câble (100) selon la revendication 15, dans lequel le septième brin de câble (43) et le huitième brin de câble (44) s'étendent dans un cinquième plan (P5).

19. Actionneur à câble (100) selon la revendication 18, dans lequel le cinquième plan (P5) et le troisième plan (P3) forment un angle de quarante-cinq degrés ou de soixante degrés.

20. Actionneur à câble (100) selon la revendication 19, dans lequel le troisième brin de câble (6.4) et le septième brin de câble (43) ou le huitième brin de câble (44) forment un unique câble continu.

21. Actionneur (100) selon la revendication 7 dans lequel le troisième brin de câble (6.4) et le quatrième brin de câble (9.4) s'étendent entre l'écrou (4) et un deuxième support intermédiaire (60) fonctionnellement relié à l'élément à déplacer (40),
l'actionneur à câble (100) comprenant une première poulie (14) et une deuxième poulie (15) respectivement reliées par un cinquième brin de câble (41) et un sixième brin de câble (43) au premier support intermédiaire (50), ainsi qu'une troisième poulie (17) et une quatrième poulie (18) respectivement reliées par un septième brin de câble (43) et un huitième brin de câble (44) au deuxième support intermédiaire (60),
le cinquième brin de câble (41) et le sixième brin de câble (42) s'étendant dans un quatrième plan (P4),
le septième brin de câble (43) et le huitième brin de câble (44) s'étendant dans un cinquième plan (P5),
l'écrou (4) comprenant une pluralité de premiers perçages (10, 10.1, 10.2, 11, 11.1, 11.2, 12, 12.1, 12.2, 13, 13.1, 13.2), le premier support (50) comprenant une pluralité de deuxièmes perçages (51, 52, 53, 54, 56),
le deuxième support comprenant une pluralité de troisièmes perçages (61, 62, 63, 64, 65, 66),
le premier brin de câble (6.1), le deuxième brin de câble (9.1), le troisième brin de câble (6.4), le quatrième brin de câble (9.4), le cinquième brin de câble (41), le sixième brin de câble (42), le septième brin de câble (43) et le huitième brin de câble (44) forment un unique câble continu attelé à l'écrou (4) par au moins un passage dans une paire de premiers perçages (10, 10.1, 10.2, 11, 11.1, 11.2, 12, 12.1, 12.2, 13, 13.1, 13.2), l'unique câble étant également attelé au premier support par au moins un passage dans une paire de deuxièmes perçages (51, 52, 53, 54, 56), l'unique câble étant également attelé au deuxième support par au moins un passage dans une paire de troisièmes perçages (61, 62, 63, 64, 65, 66).

22. Actionneur à câble selon l'une quelconque des revendications 1 à 20 dans lequel le premier brin de câble (6.1) et/ou le deuxième brin de câble (6.4) et/ou le troisième brin de câble (9.1) et/ou le quatrième brin de câble (9.4) sont attelés à l'écrou (4) par sertissage.

23. Actionneur (100) selon l'une quelconque des revendications précédentes, dans lequel l'un quelconque des brins de câbles (6.1, 6.4, 9.1, 9.4, 41, 42, 43, 44) est préchargé.

24. Actionneur (100) selon l'une quelconque des revendications précédentes, dans lequel une première distance séparant le premier brin de câble (6.1) du premier axe (Ox) est différente d'une deuxième distance séparant le troisième brin de câble (6.4) et/ou le quatrième brin de câble (9.4) du premier axe (Ox).

## Patentansprüche

1. Kabelaktor (100), umfassend:
- einen Rahmen (20);
- eine Schraube (2), die am Rahmen montiert ist und sich entlang einer ersten Achse (Ox) erstreckt;
- eine Mutter (4), die mit der Schraube (2) zusammenwirkt;
- einen Motor (3), der ausgebildet ist, die Schraube (2) in Drehung anzutreiben;
- einen ersten Kabelstrang (6.1) und einen zweiten Kabelstrang (9.1), die direkt an die Mutter (4) gekoppelt sind und sich von einer ersten Seite (8.1) einer ersten Ebene (P1), die orthogonal zur ersten Achse (Ox) ist, erstrecken und durch die Mutter (4) hindurchgehen, wobei sich der erste Kabelstrang (6.1) und der zweite Kabelstrang (9.1) in einer zweiten Ebene (P2) erstrecken;
- einen dritten Kabelstrang (6.4) und einen vierten Kabelstrang (9.4), die direkt an die Mutter (4) gekoppelt sind und sich von einer zweiten Seite (8.2) der ersten Ebene (P1) erstrecken, wobei sich der dritte Kabelstrang (6.4) und der vierte Kabelstrang (9.4) in einer dritten Ebene (P3) erstrecken;
- wobei die zweite Ebene (P2) und die dritte Ebene (P3) voneinander verschieden sind,
- wobei der erste Kabelstrang (6.1) und/oder der zweite Kabelstrang (9.1) und/oder der dritte Kabelstrang (6.4) und/oder der vierte Kabelstrang (9.4) funktional mit einem zu verschiebenden Element (40) verbunden sind, wobei der Aktor **dadurch gekennzeichnet ist, dass**
- die erste Ebene die zweite Ebene in eine erste Halbebene, in der sich der erste Kabelstrang und der zweite Kabelstrang erstrecken, und in eine zweite Halbebene teilt, die ohne Kabelstränge ist, welche direkt mit der Mutter verbunden sind, und dass
- die erste Ebene die dritte Ebene in eine dritte Halbebene, in der sich der dritte Kabelstrang und der vierte Kabelstrang erstrecken, und in eine vierte Halbebene teilt, die ohne Kabelstränge ist, welche direkt mit der Mutter verbunden sind.

2. Kabelaktor (100) nach einem der vorhergehenden Ansprüche, bei dem die Mutter (4) eine Vielzahl von ersten Bohrungen (10, 10.1, 10.2, 11, 11.1, 11.2, 12, 12.1, 12.2, 13, 13.1, 13.2) umfasst, wobei der erste Kabelstrang (6.1) und/oder der zweite Kabelstrang (9.1) und/oder der dritte Kabelstrang (6.4) und/oder der vierte Kabelstrang (9.4) durch mindestens einen Durchgang in einem Paar von ersten Bohrungen (10, 10.1, 10.2, 11, 11.1, 11.2, 12, 12.1, 12.2, 13, 13.1, 13.2) an die Mutter (4) gekoppelt sind.

3. Kabelaktor (100) nach Anspruch 2, bei dem der erste Kabelstrang (6.1) und der zweite Kabelstrang (9.1) oder der dritte Kabelstrang (6.4) oder der vierte Kabelstrang (9.4) ein einziges erstes durchgehendes Kabel (70) bilden.

4. Kabelaktor (100) nach einem der Ansprüche 1 bis 3, bei dem die erste Achse (Ox) in der zweiten Ebene (P2) und/oder in der dritten Ebene (P3) verläuft.

5. Kabelaktor (100) nach einem der vorhergehenden Ansprüche, bei dem die zweite Ebene (P2) und die dritte Ebene (P3) orthogonal sind.

6. Kabelaktor (100) nach einem der vorhergehenden Ansprüche, bei dem die zweite Ebene (P2) und die dritte Ebene (P3) einen Winkel von 60 Grad bilden.

7. Kabelaktor (100) nach einem der vorhergehenden Ansprüche, umfassend eine erste Rolle (14), eine zweite Rolle (15), eine dritte Rolle (17) und eine vierte Rolle (18), die funktional mit der Mutter (4) verbunden sind.

8. Aktor (100) nach einem der vorhergehenden Ansprüche, bei dem sich der erste Kabelstrang (6.1) und der zweite Kabelstrang (9.1) zwischen der Mutter (4) und einem ersten Zwischenträger (50) erstrecken, der funktional mit dem zu verschiebenden Element (40) durch einen fünften Kabelstrang (41) und einen sechsten Kabelstrang (42) verbunden ist.

9. Kabelaktor (100) nach den Ansprüchen 7 und 8, bei dem sich der fünfte Kabelstrang (41) zwischen der ersten Rolle (14) und dem ersten Zwischenträger (50) erstreckt, wobei sich der sechste Kabelstrang (42) zwischen der zweiten Rolle (15) und dem ersten Zwischenträger (50) erstreckt.

10. Kabelaktor (100) nach einem der Ansprüche 8 oder 9, bei dem der erste Zwischenträger (50) eine Vielzahl von zweiten Bohrungen (51, 52, 53, 54, 56) umfasst, der erste Kabelstrang (6.1) und/oder der zweite Kabelstrang (9.1) an den ersten Zwischenträger (50) durch mindestens einen Durchgang in einem Paar von zweiten Bohrungen (51, 52, 53, 54, 56) gekoppelt sind.

11. Kabelaktor (100) nach Anspruch 9, bei dem unter Berücksichtigung, dass der erste Zwischenträger (50) eine Vielzahl von zweiten Bohrungen (51, 52, 53, 54, 56) umfasst, der fünfte Kabelstrang (41) und/oder der sechste Kabelstrang (42) an den ersten Zwischenträger (50) durch mindestens einen Durchgang in einem Paar von zweiten Bohrungen (51, 52, 53, 54, 56) gekoppelt sind.

12. Kabelaktor (100) nach einem der Ansprüche 9 bis 11, bei dem sich der fünfte Kabelstrang (41) und der sechste Kabelstrang (42) in einer vierten Ebene (P4) erstrecken.

13. Kabelaktor (100) nach Anspruch 12, bei dem die vierte Ebene (P4) und die zweite Ebene (P2) einen Winkel von 45 Grad oder 60 Grad bilden.

14. Kabelaktor (100) nach einem der vorhergehenden Ansprüche, bei dem sich der dritte Kabelstrang (6.4) und der vierte Kabelstrang (9.4) zwischen der Mutter (4) und einem zweiten Zwischenträger (60) erstrecken, der funktional mit dem zu verschiebenden Element (40) verbunden ist.

15. Kabelaktor (100) nach den Ansprüchen 7 und 14, bei dem sich ein siebter Kabelstrang (43) zwischen der dritten Rolle (17) und dem zweiten Zwischenträger (60) erstreckt, wobei sich ein achter Kabelstrang (44) zwischen der vierten Rolle (18) und dem zweiten Zwischenträger (60) erstreckt.

16. Kabelaktor (100) nach einem der Ansprüche 14 oder 15, bei dem unter Berücksichtigung, dass der zweite Zwischenträger (60) eine Vielzahl von dritten Bohrungen (61, 62, 63, 64, 65, 66) umfasst, der dritte Kabelstrang (6.4) und/oder der vierte Kabelstrang (9.4) an den zweiten Zwischenträger (60) durch mindestens einen Durchgang in einem Paar von dritten Bohrungen (61, 62, 63, 64, 65, 66) gekoppelt sind.

17. Kabelaktor (100) nach einem der Ansprüche 15 oder 16, bei dem unter Berücksichtigung, dass der zweite Zwischenträger (60) eine Vielzahl von dritten Bohrungen (61, 62, 63, 64, 65, 66) umfasst, der siebte Kabelstrang (43) und/oder der achte Kabelstrang (44) an den zweiten Zwischenträger (60) durch mindestens einen Durchgang in einem Paar von dritten Bohrungen (61, 62, 63, 64, 65, 66) gekoppelt sind.

18. Kabelaktor (100) nach Anspruch 15, bei dem sich der siebte Kabelstrang (43) und der achte Kabelstrang (44) in einer fünften Ebene (P5) erstrecken.

19. Kabelaktor (100) nach Anspruch 18, bei dem die fünfte Ebene (P5) und die dritte Ebene (P3) einen Winkel von 45 Grad oder von 60 Grad bilden.

20. Kabelaktor (100) nach Anspruch 19, bei dem der dritte Kabelstrang (6.4) und der siebte Kabelstrang (43) oder der achte Kabelstrang (44) ein einziges durchgehendes Kabel bilden.

21. Aktor (100) nach Anspruch 7, bei dem sich der dritte Kabelstrang (6.4) und der vierte Kabelstrang (9.4) zwischen der Mutter (4) und einem zweiten Zwischenträger (60) erstrecken, der funktional mit dem zu verschiebenden Element (40) verbunden ist,
wobei der Kabelaktor (100) eine erste Rolle (14) und eine zweite Rolle (15) umfasst, die durch einen fünften Kabelstrang (41) bzw. einen sechsten Kabelstrang (43) mit dem ersten Zwischenträger (50) verbunden sind, sowie eine dritte Rolle (17) und eine vierte Rolle (18), die durch einen siebten Kabelstrang (43) bzw. einen achten Kabelstrang (44) mit dem zweiten Zwischenträger (60) verbunden sind,
wobei sich der fünfte Kabelstrang (41) und der sechste Kabelstrang (42) in einer vierten Ebene (P4) erstrecken,
wobei sich der siebte Kabelstrang (43) und der achte Kabelstrang (44) in einer fünften Ebene (P5) erstrecken,
wobei die Mutter (4) eine Vielzahl von ersten Bohrungen (10, 10.1, 10.2, 11, 11.1, 11.2, 12, 12.1, 12.2, 13, 13.1, 13.2) umfasst, wobei der erste Träger (50) eine Vielzahl von zweiten Bohrungen (51, 52, 53, 54, 56) umfasst,
wobei der zweite Träger eine Vielzahl von dritten Bohrungen (61, 62, 63, 64, 65, 66) umfasst,
wobei der erste Kabelstrang (6.1), der zweite Kabelstrang (9.1), der dritte Kabelstrang (6.4), der vierte Kabelstrang (9.4), der fünfte Kabelstrang (41), der sechste Kabelstrang (42), der siebte Kabelstrang (43) und der achte Kabelstrang (44) ein einziges durchgehendes Kabel bilden, das an die Mutter (4) durch mindestens einen Durchgang in einem Paar von ersten Bohrungen (10, 10.1, 10.2, 11, 11.1, 11.2, 12, 12.1, 12.2, 13, 13.1, 13.2) gekoppelt ist, wobei das einzige Kabel ferner an den ersten Träger durch mindestens einen Durchgang in einem Paar von zweiten Bohrungen (51, 52, 53, 54, 56) gekoppelt ist, wobei das einzige Kabel ferner an den zweiten Träger durch mindestens einen Durchgang in einem Paar von dritten Bohrungen (61, 62, 63, 64, 65, 66) gekoppelt ist.

22. Kabelaktor nach einem der Ansprüche 1 bis 20, bei dem der erste Kabelstrang (6.1) und/oder der zweite Kabelstrang (6.4) und/oder der dritte Kabelstrang (9.1) und/oder der vierte Kabelstrang (9.4) mit der Mutter (4) durch Crimpen verbunden sind.

23. Aktor (100) nach einem der vorhergehenden Ansprüche, bei dem irgendeiner der Kabelstränge (6.1, 6.4, 9.1, 9.4, 41, 42, 43, 44) vorgespannt ist.

24. Aktor (100) nach einem der vorhergehenden Ansprüche, bei dem sich ein erster Abstand, der den ersten Kabelstrang (6.1) von der ersten Achse (Ox) trennt, von einem zweiten Abstand, der den dritten Kabelstrang (6.4) und/oder den vierten Kabelstrang (9.4) von der ersten Achse (Ox) trennt, unterscheidet.

## Claims

1. A cable actuator (100) comprising:
• a frame (20);
• a screw (2) mounted on the frame and extending along a first axis (Ox);
• a nut (4) co-operating with the screw (2);
• a motor (3) arranged to drive the screw (2) in rotation;
• a first cable strand (6.1) and a second cable strand (9.1) coupled directly to the nut (4) and extending on a first side (8.1) of a first plane (P1) orthogonal to the first axis (Ox) and containing the nut (4), the first cable strand (6.1) and the second cable strand (9.1) extending in a second plane (P2);
• a third cable strand (6.4) and a fourth cable strand (9.4) coupled directly to the nut (4) and extending on a second side (8.2) of the first plane (P1), the third cable strand (6.4) and the fourth cable strand (9.4) extending in a third plane (P3);
• the second plane (P2) and the third plane (P3) being distinct; and
• the first cable strand (6.1) and/or the second cable strand (9.1) and/or the third cable strand (6.4) and/or the fourth cable strand (9.4) being functionally connected to an element (40) that is to be moved,
the cable actuator being caracterized in that the first plane (P1) subdivides the second plane (P2) into a first half-plane (P21) in which the first cable strand (6.1) and the second cable strand (9.1) extend, and into a second half-plane (P22) not having any cable strands that are directly connected to the nut (4); and in that
• the first plane (P1) subdivides the third plane (P3) into a third half-plane (P31) in which the third cable strand (6.4) and the fourth cable strand (9.4) extend, and into a fourth half-plane (P32) not having any cable strands that are directly connected to the nut.

2. A cable actuator (100) according to claim 1, wherein the nut (4) has a plurality of first holes (10, 10.1, 10.2, 11, 11.1, 11.2, 12, 12.1, 12.2, 13, 13.1, 13.2), and the first cable strand (6.1) and/or the second cable strand (9.1) and/or the third cable strand (6.4) and/or the fourth cable strand (9.4) are coupled to the nut (4) by at least one segment passing through a pair of first holes (10, 10.1, 10.2, 11, 11.1, 11.2, 12, 12.1, 12.2, 13, 13.1, 13.2).

3. A cable actuator (100) according to claim 2, wherein the first cable strand (6.1) and the second cable strand (9.1) or the third cable strand (6.4) or the fourth cable strand (9.4) form a single first continuous cable (70).

4. A cable actuator (100) according to any one of claims 1 to 3, wherein the first axis (Ox) extends in the second plane (P2) and/or in the third plane (P3).

5. A cable actuator (100) according to any preceding claim, wherein the second plane (P2) and the third plane (P3) are orthogonal.

6. A cable actuator (100) according to any preceding claim, wherein the second plane (P2) and the third plane (P3) form an angle of 60°.

7. A cable actuator (100) according to any preceding claim, including a first pulley (14), a second pulley (15), a third pulley (17), and a fourth pulley (18) that are functionally connected to the nut (4).

8. A cable actuator (100) according to any preceding claim, wherein the first cable strand (6.1) and the second cable strand (9.1) extend between the nut (4) and a first intermediate support (50) that is connected to the element (40) that is to be moved functionally by means of a fifth cable strand (41) and of a sixth cable strand (42).

9. A cable actuator (100) according to claims 7 and 8, wherein the fifth cable strand (41) extends between the first pulley (14) and the first intermediate support (50), and the sixth cable strand (42) extends between the second pulley (15) and the first intermediate support (30) .

10. A cable actuator (100) according to claim 8 or claim 9, wherein the first intermediate support (50) includes a plurality of second holes (51, 52, 53, 54, 56), and the first cable strand (6.1) and/or the second cable strand (9.1) is/are coupled to the first intermediate support (50) by at least one segment passing through a pair of second holes (51, 52, 53, 54, 56).

11. A cable actuator (100) according to claim 9, wherein the first intermediate support (50) includes a plurality of second holes (51, 52, 53, 54, 56), and the fifth cable strand (41) and/or the sixth cable strand (42) is/are coupled to the first intermediate support (50) by at least one segment passing through a pair of second holes (51, 52, 53, 54, 56).

12. A cable actuator (100) according to any one of claims 9 to 11, wherein the fifth cable strand (41) and the sixth cable strand (42) extend in a fourth plane (P4).

13. A cable actuator (100) according to claim 12, wherein the fourth plane (P4) and the second plane (P2) form an angle of 45° or of 60°.

14. A cable actuator (100) according to any preceding claim, wherein the third cable strand (6.4) and the fourth cable strand (9.4) extend between the nut (4) and a second intermediate support (60) that is functionally connected to the element (40) that is to be moved.

15. A cable actuator (100) according to claims 7 and 14, wherein a seventh cable strand (43) extends between the third pulley (17) and the second intermediate support (60), and an eighth cable strand (44) extends between the fourth pulley (18) and the second intermediate support (60).

16. A cable actuator (100) according to claim 14 or claim 15, wherein the second intermediate support (60) includes a plurality of third holes (61, 62, 63, 64, 65, 66), and the third cable strand (6.4) and/or the fourth cable strand (9.4) is/are coupled to the second intermediate support (60) by at least one segment passing through a pair of third holes (61, 62, 63, 64, 65, 66).

17. A cable actuator (100) according to claim 15 or claim 16, wherein the second intermediate support (60) includes a plurality of third holes (61, 62, 63, 64, 65, 66), and the seventh cable strand (43) and/or the eighth cable strand (44) is/are coupled to the second intermediate support (60) by at least one segment passing through a pair of third holes (61, 62, 63, 64, 65, 66).

18. A cable actuator (100) according to claim 15, wherein the seventh cable strand (43) and the eighth cable strand (44) extend in a fifth plane (P5).

19. A cable actuator (100) according to claim 18, wherein the fifth plane (P5) and the third plane (P3) form an angle of 45° or of 60°.

20. A cable actuator (100) according to claim 19, wherein the third cable strand (6.4) and the seventh cable strand (43) or the eighth cable strand (44) form a single continuous cable.

21. An actuator (100) according to claim 7 wherein the third cable strand (6.4) and the fourth cable strand (9.4) extend between the nut (4) and a second intermediate support (60) that is functionally connected to the element (40) that is to be moved;
• the cable actuator (100) including a first pulley (14) and a second pulley (15) connected respectively by a fifth cable strand (41) and by a sixth cable strand (43) to the first intermediate support (50), and also a third pulley (17) and a fourth pulley (18) connected respectively by a seventh cable strand (43) and by an eighth cable strand (44) to the second intermediate support (60);
• the fifth cable strand (41) and the sixth cable strand (42) extending in a fourth plane (P4);
• the seventh cable strand (43) and the eighth cable strand (44) extending in a fifth plane (P5);
• the nut (4) including a plurality of first holes (10, 10.1, 10.2, 11, 11.1, 11.2, 12, 12.1, 12.2, 13, 13.1, 13.2), the first support (50) including a plurality of second holes (51, 52, 53, 54, 56);
• the second support including a plurality of third holes (61, 62, 63, 64, 65, 66); and
• the first cable strand (6.1), the second cable strand (9.1), the third cable strand (6.4), the fourth cable strand (9.4), the fifth cable strand (41), the sixth cable strand (42), the seventh cable strand (43), and the eighth cable strand (44) form a single continuous cable coupled to the nut (4) by at least one segment passing through a pair of first holes (10, 10.1, 10.2, 11, 11.1, 11.2, 12, 12.1, 12.2, 13, 13.1, 13.2), the single cable also being coupled to the first support by at least one segment passing through a pair of second holes (51, 52, 53, 54, 56), the single cable also being coupled to the second support by at least one segment passing through a pair of third holes (61, 62, 63, 64, 65, 66).

22. A cable actuator according to any one of claims 1 to 20, wherein the first cable strand (6.1) and/or the second cable strand (6.4) and/or the third cable strand (9.1) and/or the fourth cable strand (9.4) is/are coupled to the nut (4) by crimping.

23. An actuator (100) according to any preceding claim, wherein any one of the cable strands (6.1, 6.4, 9.1, 9.4, 41, 42, 43, 44) is preloaded.

24. An actuator (100) according to any preceding claim, wherein a first distance between the first cable strand (6.1) and the first axis (Ox) is different from a second distance between the third cable strand (6.4) and/or the fourth cable strand (9.4) and the first axis (Ox).
